# EUROPEAN PATENT APPLICATION

(11) **EP 1 704 958 A1**
(43) Date of publication of application: **27.09.2006**
(21) Application number: 06012057.3
(22) Date of filing: 18.05.2001
(51) Int. Cl.: B23Q 3/155, B23Q 3/157

(54) **Tool-holder storage device and machine tool including said storage device**

(62) Divisional of application: 01830319.8
(71) Applicant: Paolino Bacci S.R.L., 56021 Cascina, PI (IT)
(72) Inventor: Ruggieri, Alberto, 56025 Pontedera Pisa (IT)
(74) Representative: Mannucci, Michele

(57) **Abstract**

The tool-holder storage device (1) includes a rotating unit (15) equipped with a multitude of supports (17) for said tools (U). The rotating unit has a development with an edge composed by an incomplete arc of a circumference along which the supports for the tools are distributed.

## Description

This invention relates to a tool-holder storage device for a machine tool that is designed for automatically changing the tools supported by the spindle of the machine tool. The invention also relates to a machine tool including this type of storage device.

In many industrial sectors, numeric-control machine tools and/or work stations are adopted for carrying out chip-removal machining. In particular, in the field of manufacturing on of wooden articles for furniture, such as chairs and frames for sofas and settees, work stations and machine tools for machining their components are used. The machine tools or the work station includes one or more operating units whose head is provided with a single or multiple spindle in which a multitude of different tools can be fitted depending on the machining that must be done on the workpieces being machined. Frequently, during a single manufacturing cycle, one or more of the tools must be substituted since a plurality of different machining operations might have to be performed on a single workpiece (or workpieces processed sequentially), for example parting, boring, mortising, tenoning, internal or external turning, various forms of milling, etc.

Since the number of tools simultaneously available for use on the operating unit or operating units (for example, two) on the machine is limited, a tool-holder storage device may prove necessary in some cases, where the tools temporarily out of use can be deposited. At appropriate times during the manufacturing cycle, the operating unit is conveyed to the tool change area and one or more of the tools applied on the spindle or spindles of the unit itself are replaced with others which are temporarily deposited in the tool-holder storage device.

At present, tool-holder storage devices with various configurations are available for this purpose. Typically, and especially for the sector of machine tools designed for working with wood, tool-holder storage devices are used which are constituted by a disk-shaped unit that rotates on its own axis and that is usually, but not always, positioned in a horizontal layout. Various interchangeable tools can be found on this disk-shaped support.

One example of a tool-holder storage device is described in US-A-4,761,877. In this storage device, the tools are supported by a circular or disk-shaped unit that rotates around a horizontal axis. in US-A-3,263,300, a tool-holder storage device is described with a disk-shaped unit that rotates around a vertical axis and is positioned above the upright supporting the operating head of the machine tool.

US-A-5,097,877 describes a tool-holder storage device that includes a disk-shaped unit rotating around a vertical axis and that moves along an axis of translation, enabling the substitution of tools on a revolver head of a machine tool, whereby the storage device is found above the operating head.

GB-A-2,101,028 and GB-A-2,144,668 describe a tool-holder storage device for a turning lathe. In this case, too, the tool-holder storage device has a disk-shaped structure and rotates around an axis in order to present one or the other of the various seats to the turret of the machine tool for substituting the tools.

Other examples of tool-holder storage devices are described in EP-A0106595.

The tool-holder storage device must be positioned beyond the operational area of the operating unit and the envelope of the positions of the workpiece to be machined, and of the supports that clamp the workpiece into place, in order to prevent it from interfering with the movements of the unit during processing the workpiece. However, it must be located in a point easily accessible for the operating unit when a tool substitution operation must be done. For this purpose, the operating unit can be designed with an extra-run that conveys the spindle or spindles to an area outside the operational area but in proximity of the tool-holder storage device, in order to carry out the tool substitution. In this case, the tool-holder storage device can be arranged in a stationary position and the operating unit is conveyed either above or next to this. However, this solution requires an elevated volume and a particularly long guide for moving the operating unit, volumes and lengths which are otherwise useless for the machining itself.

This is why it is better to design the tool-holder storage device to be moveable so that it can assume a concealed position with respect to the working area of the operating unit and is moved inside the working area only when the tool change operation must be done. For this purpose, the tool-holder storage device is supported by an oscillating arm that moves the storage device into the working area of the operating unit at the appropriate time. Furthermore, as mentioned previously, in order to present to the operating unit either the correct tool or the empty seat where the operating unit must deposit the tool no longer being used, the disk-shaped unit is designed for a rotational movement around its own axis.

This design, while resulting in reduced overall dimensions of the machine tool, still leads to a series of drawbacks. In the first place, two separate motors or actuators are necessary in order to control the movement of oscillation of the arm that supports the disk-shaped unit and to control the rotation of the disk-shaped unit around its axis. This makes the storage device expensive and complicated.

In the second place, the movement for introducing the tool-holder storage device into the operational area and the successive or contemporaneous positioning of the disk-shaped unit into the correct angular position are quite time consuming operations. This makes the total time of the manufacturing cycle longer.

A machine tool with a tool holder according to the preamble of claim 1 is disclosed in DE-A-19534093. In this known machine tool large tools are arranged on a discoidal tool holder storage device which has a cut away portion. The operative head of the machine tool has a vertical arranged mandrel and is controlled along axes of translation. The tools are picked up from and replaced into said storage device by an auxiliary double-sided handling pick-up device which transfers the tools from the storage device to the mandrel of the operating head and vice-versa.

The purpose of this invention is to design a tool-holder storage device and a machine tool equipped with such a storage device, which can overcome the drawbacks of the current art.

This object is achieved with the combination of features of claim 1. The dependent claims relate to particularly advantageous further developments of the invention.

In the context of the description given here and the annexed claims, the term "machine tool" generally refers to a work station or any other system equipped with an operating unit, too, including at least one spindle and controlled along one or more operational axes.

Essentially, the invention envisages a tool-holder storage device for a machine tool, including a unit rotating around a respective axis of rotation with several supports for said tools, characterized in that said rotating unit has a portion of it removed along a first section of its perimeter development, said supports being arranged around the remaining section of the perimeter development of the rotating unit, the rotation around said axis introducing and removing the supports into and from a withdrawal and deposit area of the tools from and onto said supports.

In practice, since one portion has been removed, the rotating unit has an asymmetrical form with respect to a plane perpendicular to the rotating unit and including the axis of rotation of said rotating unit.

In practice, the supports of the tools are positioned along an arc of less than 360° in circumference, along which said supports are moved by the rotation of the rotating unit around the axis of rotation. For example, the supports can be distributed over an arc of just over 180°, or even less than 180°, for example even an arc of less than 90°. The smaller the arc along which the supports for the tools are distributed, the lesser will be the development of the unit rotating around its axis of rotation. If the tools are distributed on supports with their axis parallel to the axis of rotation, the tools can be positioned in a sufficient number even if they are distributed along an arc of less than 90°, for example.

In practice, with this arrangement, the supports of the tools are included in a sector of an annulus having a development of less than 360°, preferably less than 220° and if necessary, less than 90°.

As will appear evident by the description of some practical forms of embodiment, the storage device according to the invention enables to overcome the drawbacks of the prior art by obtaining a very compact machine tool. In fact, the tool-holder storage device can be positioned adjacent to the working area of the operating unit of the machine tool, so that by rotating the unit until the cut portion (that is, the straight edge in case it is a circular segment) is facing the working area of the operating unit, the rotating unit does not interfere with the working area; while, by rotating the rotating unit until the portion where the supports of the tools are positioned is facing towards the working area, the unit enters the area accessible by the operating unit.

This offers a series of advantages. In the first place, it is no longer necessary to design two motors for controlling the motion of the tool-holder storage device. In fact, the same motor that sets in motion the rotation of the rotating unit around its axis also conveys the various supports of the tools to the area accessible by the operating unit and determines the correct angular position in order to enable the unit to withdraw the correct tool and deposit the tool which no longer necessary by the spindle.

In the second place, it is possible to synchronize the angular movement of the rotating unit with the movement of the operating unit so that the total amount of time necessary for substituting the tools is reduced to a minimum. In fact, the axis controlling the rotation of the tool-holder storage device can be interpolated with the axis controlling the operating unit. The tool-holder storage device and the spindle are conveyed simultaneously to the position where the tool change is carried out, the movement of the storage device being a simple angular positioning movement of the rotating unit. This is not possible with the traditional storage devices that can be conveyed to the tool change area only after the operating unit has concluded its work, thus preventing collisions.

The supports for the tools can be arranged in a radial position or axial position; i.e. such as to keep the tools with their axes in the radial position with respect to the rotating unit or in a position parallel to the axis of rotation of the unit itself. In the former case, the approaching movement towards the storage device is a radial movement of the spindle of the operating unit. In the second case, the spindle approaches the storage device with a movement parallel to the axis of rotation of the rotating unit. With the radial arrangement, it is also possible to design a storage device with the tools positioned on several levels and to keep clean the hollow cones of the tools with an HSK type attachment.

Other advantageous characteristics of the tool-holder storage device according to the invention are set forth in the attached claims.

The invention relates also to a machine tool including a tool-holder storage device of the above described type.

The invention will be easier to understand after carefully reviewing the description and the attached illustrations, which show a practical non-limiting embodiment of the invention. More specifically:
Fig. 1 is a plan view of the tool-holder storage device and of the operating unit;
Fig. 2 is view and partial section taken along the line II-II of Fig. 1;
Figs. 3A and 3B illustrate in a plan view the movement of the storage device for insertion of a tool;
Fig. 4 shows a section of a modified embodiment of the tool-holder storage device;
Fig. 5 shows another plan view of a further modified embodiment of the storage device according to the invention;
Fig. 6 shows a schematic plan view of a machine tool or a complete work station equipped with an operating unit and a tool-storage device according to the invention;
Figs. 7A and 7B schematically illustrate two examples of the sequence of movements for withdrawing a tool from the storage device and for depositing a tool in the storage device in a machine similar to the one illustrated in Fig.6;
Fig. 8 shows a front view of the machine tool equipped with the tool-holder storage device according to a different embodiment of the invention, ideal for application in machines with fewer axes;
Fig. 9 shows a plan view along IX-IX of Fig. 8;
Figs. 10 and 11 show analogous views to Figs. 8 and 9 of a machine tool similar to the previous one, with a different placement of the tool-holder storage device;
Fig. 12 shows an enlargement of the tool-holder storage device shown in Figs. 8 to 10; and
Fig. 13 shows a plan view of a machine tool.

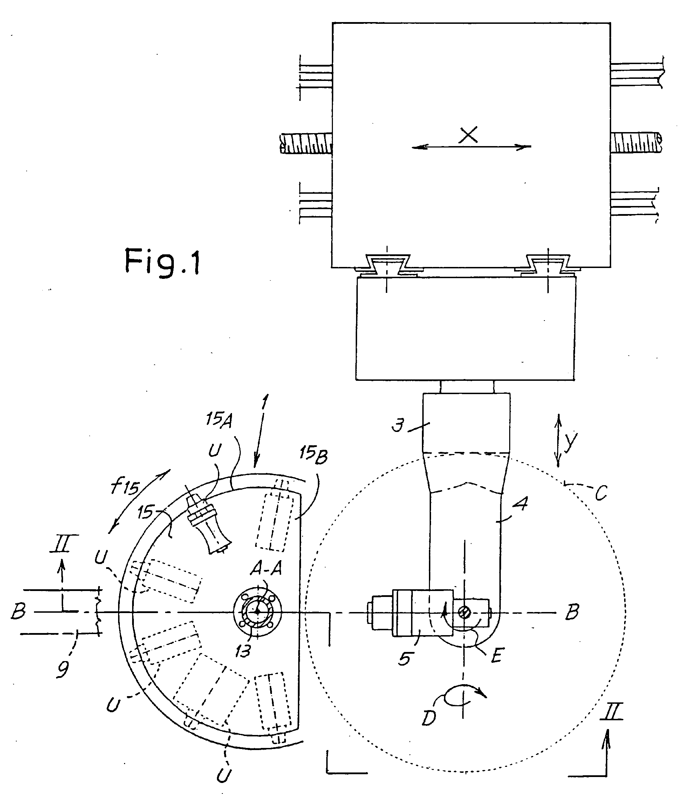

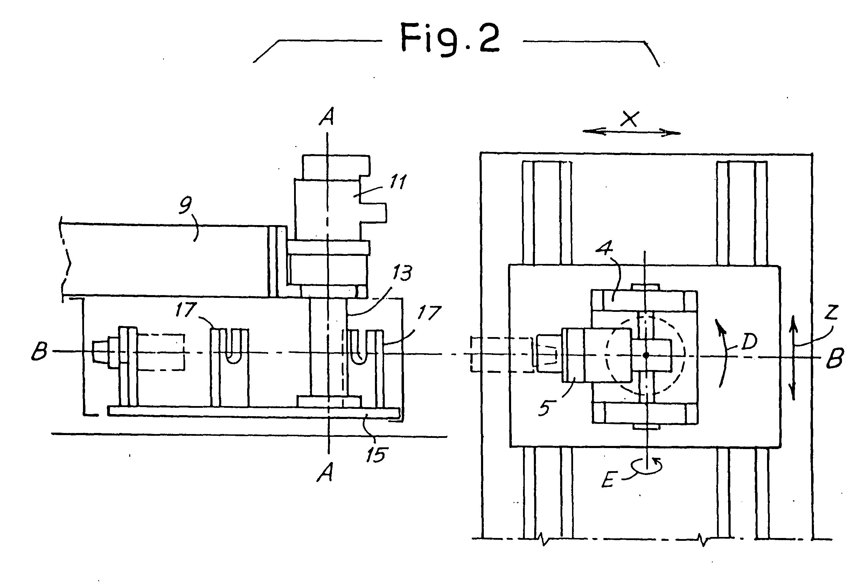

In Figs. 1 and 2, first embodiment of the invention is illustrated. The tool-holder storage device is generically designated 1, while 3 indicates an operating unit furnished with a head 3 with a fork bearing a spindle 5. In the example illustrated, the spindle can perform a variety of movements along numeric-control axes. In the example, two axes of horizontal translation X, Y and an axis of vertical translation Z are shown. There are also two oscillating movements around axes D and E. The structure of the operating unit and the type of movements are known per se and do not require further descriptions in this document. Not all the movements are indispensable for changing the tools.

The tool-holder storage device 1 is supported by a stationary beam 9, that in Fig. 1 is interrupted for a clearer understanding of the illustration. The support beam 9 supports a motor 11 whose outlet shaft drives into rotation a vertical shaft 13 that bears a rotating unit 15 on its end. As can be seen in detail in the plan view in Fig. 1, the rotating unit 15 has the shape of a cut disk and its perimeter edge is constituted by a first section in the shape of an arc of a circumference 15A and by a second section constituted by a chord 15B. Essentially, the rotating unit 15 has therefore the shape of a segment of a circle that in this example has a development greater than a semi-circle since the axis of rotation A-A is found inside the area delimited by the arc of circumference 15A and by the chord 15B. The section of the circle might have a smaller development, with the axis of rotation A-A positioned outside the segment itself. In this case, for example, a connecting arm could be provided between the supporting and rotation axis and the segment of the circle. The chord 15B constitutes the section of perimeter development along which a part of the rotating unit 15 has been removed, making this latter asymmetrical with respect to the axis A-A.

The rotating unit 15 is equipped with a plurality of supports 17 in order to house tools U that can be mounted on the spindle 5 in order to execute various forms of processing by means of the operating unit 3 on a workpiece not shown. The supports 17 are positioned along the perimeter section of the rotating unit constituted by the arc of circumference 15A, that is, not along the section that corresponds to the portion of the axial-symmetric figure (circle) which has been removed to form the segment of the circle constituting the rotating unit.

The configuration of the supports 17 is such to keep the tools U with their axes in a radial position with respect to the rotating unit 15.

In Fig. 1, the operating unit is shown in the extreme operational position, namely, in the closest possible position to the storage device 1. In this position, the operating unit can still carry out its processing and therefore, the spindle 5 with the tool clamped to it must not interfere with the tool-holder storage device 1. C designates the circumference area of movement of the tool with the greatest axial dimension that can be mounted on spindle 5. As can be seen in Fig. 1, when the tool-holder storage device 1 is found in the angular position shown here, that is, with the edge constituted by the chord 15B facing towards the operating unit, the circumference C does not intersect with tool-holder storage device 1. Therefore, the operating unit can execute any movement in this position without risking a collision between the tool-holder storage device 1 and the tool mounted on the spindle 5.

When it is necessary to change the tool supported by spindle 5, the motor 11 controls an angular movement around the axis of rotation A-A of the rotating unit 15, in the direction of the double arrow f15. The movement can be executed either only in the same direction or in a clockwise or counter-clockwise direction depending on the final position that the storage device must assume.

The movement is such to bring the spindle 5 into alignment with the support 17 required. This can be an empty support on which the spindle 5 must deposit the tool temporarily being used, or a support 17 on which the tool is found that must be inserted into spindle 5. In Fig. 1 the direction of alignment between the support and the spindle 5 is designed with B-B. The movement of rotation in the direction indicated by f15 of the rotating unit 15 is interpolated and synchronized with the movement of the operating unit 3, and the two movements are controlled by the same programmable control unit, in order to reduce the time necessary for this operation. This means, for example, that the rotating movement of the rotating unit 15 can begin when the spindle 5 is found at a certain distance from the tool change area, where the machining on one workpiece is being completed. The rotation and angular positioning of the rotating unit 15 terminate when the spindle 5 is aligned along the straight line from B-B and completes the final movement in this direction in order to deposit the tool in the empty support 17, or in order to engage the new tool.

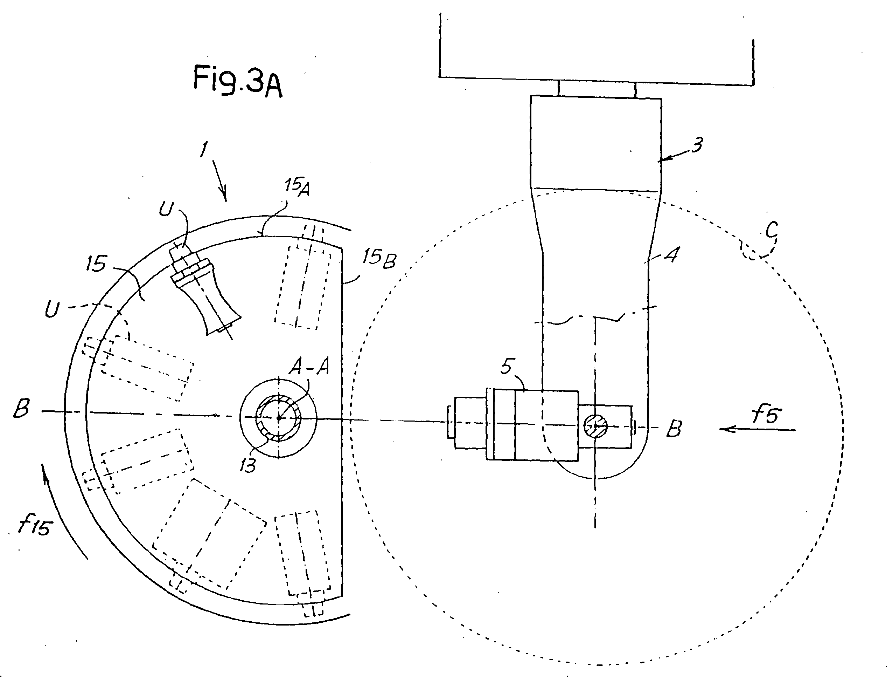

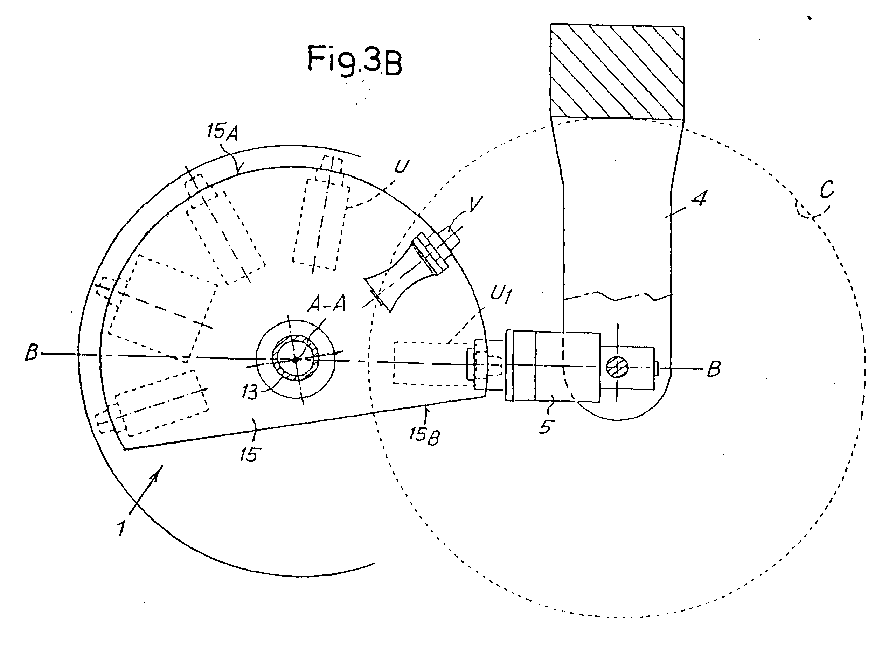

The movement carried out by the tool-holder storage device 1 and the spindle 5 to obtain the engagement of an tool is clearly illustrated in Figs. 3A and 3B. In Fig. 3A the storage device 1 is still in the concealed position with respect to the operational area of the operating unit 3, that is, with the portion of the straight edge 15B of the rotating unit 15 turned towards the operating unit. The start of the movement of angular positioning is designated with f15. The spindle 5 is in the correct angular position and approaches the storage device according to arrow f5. In Fig. 3B, the tool-holder storage device 1 has reached the correct angular position with the tool U1 in the position aligned with the spindle 5 along the straight line B-B. The spindle 5 in the meantime has approached close enough to bring the shank of the tool U1 into engagement with the spindle itself. The movements designated by f5 and f15 are interpolated and synchronized as indicated above.

It seems clear from the above, that with the asymmetrical form obtained by removing along the chord 15B a portion of the figure of revolution (with axial symmetry with respect to A-A) making up the rotating unit, the possibility is achieved of introducing the supports 17 into the tool withdrawal and deposit area by the spindle as well as the possibility of selecting these supports, all with a single movement of controlled rotation.

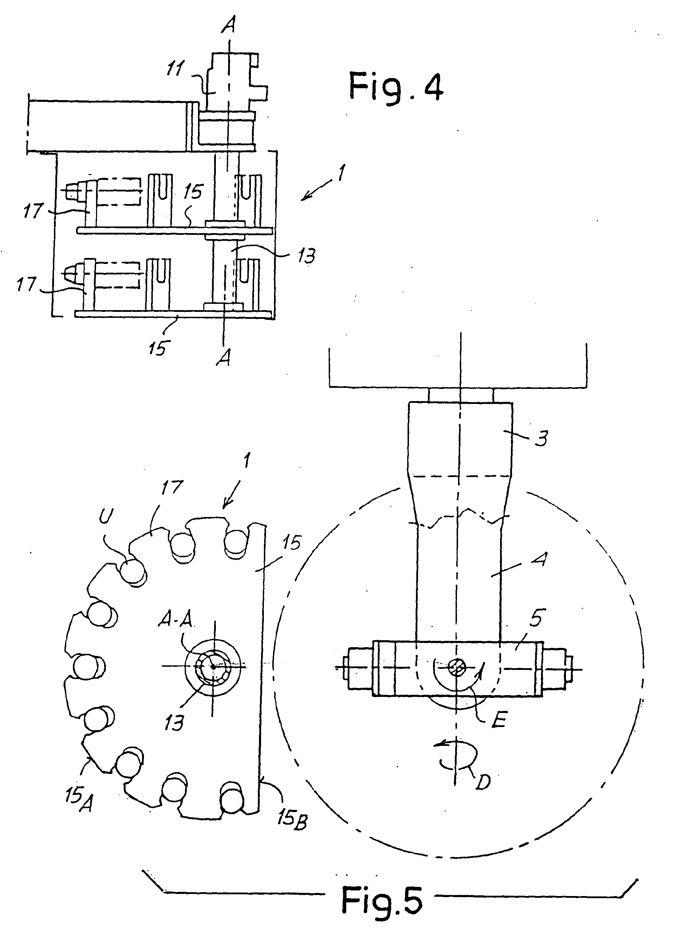

Fig. 4 shows a modified embodiment of the tool-holder storage device 1. In this embodiment, two series of supports 17 are provided and placed on two different levels. The tools are supported radially again onto the double level rotating unit. The same reference numbers designate identical or corresponding parts to those shown in the previous embodiment. Fig 5 shows a modified embodiment whereby the tools are supported with their own axis parallel to the rotation axis A-A of the rotating unit 15. For example, the spindle is illustrated double in this case, but it should be understood that the configuration of the spindle can vary in aii the cases described (single, double, or even with a greater number of tools, for example, as a crossed spindle with four tools). The movement of tool engagement and deposit performed by the spindle 5 is parallel to axis A-A while in the two previous cases it was radial.

The embodiment shown in Fig. 5 enables a greater number of tools to be positioned on the same level compared with the embodiment shown in Fig. 1, without having to use the multiple-level arrangement shown in Fig. 4.

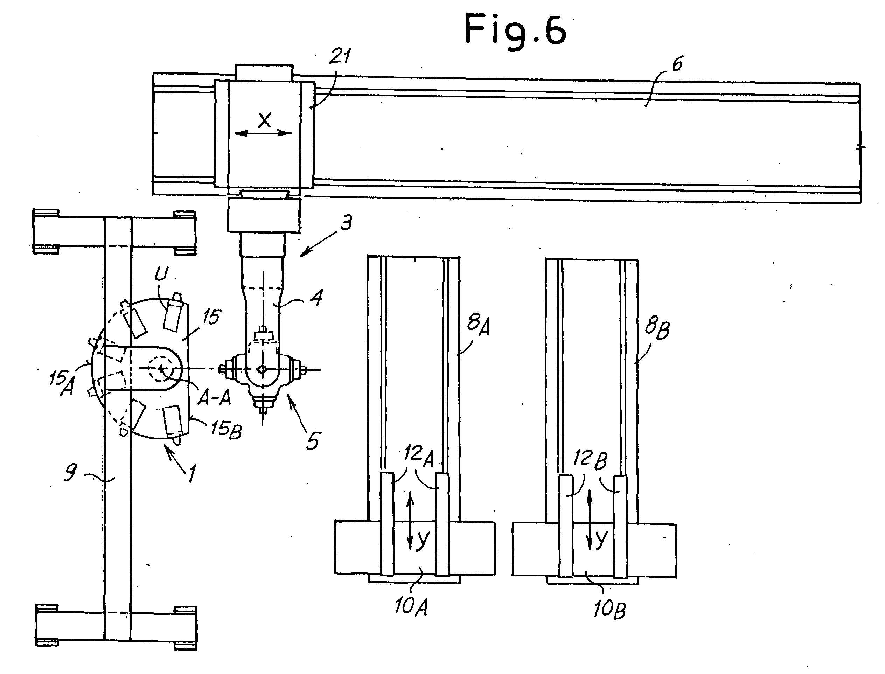

Fig. 6 illustrates a schematic plan view of a machine tool or complete work station, equipped with the tool-holder storage device according to the invention. The machine tool has a structure similar to the type described and illustrated in EP-A-0873817.

Reference number 1 designates the tool-holder storage device and the reference number 3 designates the operating head supported by a unit 21 moving along an X axis, translating along a base 6. In front of base 6, there are two secondary bases 8A and 8B on which two slides 10A and 10B translate, supporting beams 12A, 12B where the workpieces undergoing processing are clamped on. Y designates the axis of horizontal translation perpendicular to the X axis. In this case, the movement along the Y direction is assigned to the slides 10A and 10B and therefore to the workpiece, instead of to the operating unit 3. This movement is not necessary for carrying out the tool change operation. The third translation axis Z is vertical and therefore perpendicular to the plane of the figure.

The operating head 3 is equipped with a fork 4 bearing a crossed spindle 5.

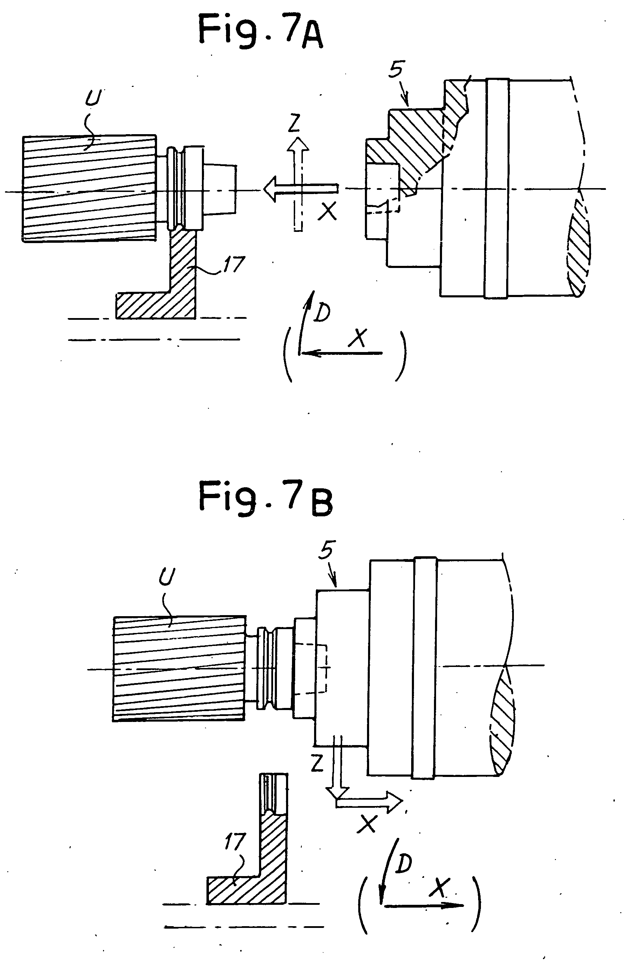

Figs 7A and 7B illustrate schematically the movements that the spindle 5 carries out in withdrawing the tool U (Fig. 7A) and the movements necessary in depositing the tool U in the storage device 1. The withdrawal movement is a movement of approach along axis X to convey the shank of the tool U into engagement with the spindle and then a movement along the Z direction for extracting the spindle from the support 17. An alternative sequence of movements is indicated between parentheses, where the tool U is distanced from support 17 by means of a rotation around the D axis.

Movements in the reverse direction according to the Z and X direction or according to the D and X direction enable the tool U to be deposited in the storage device (Fig.7B).

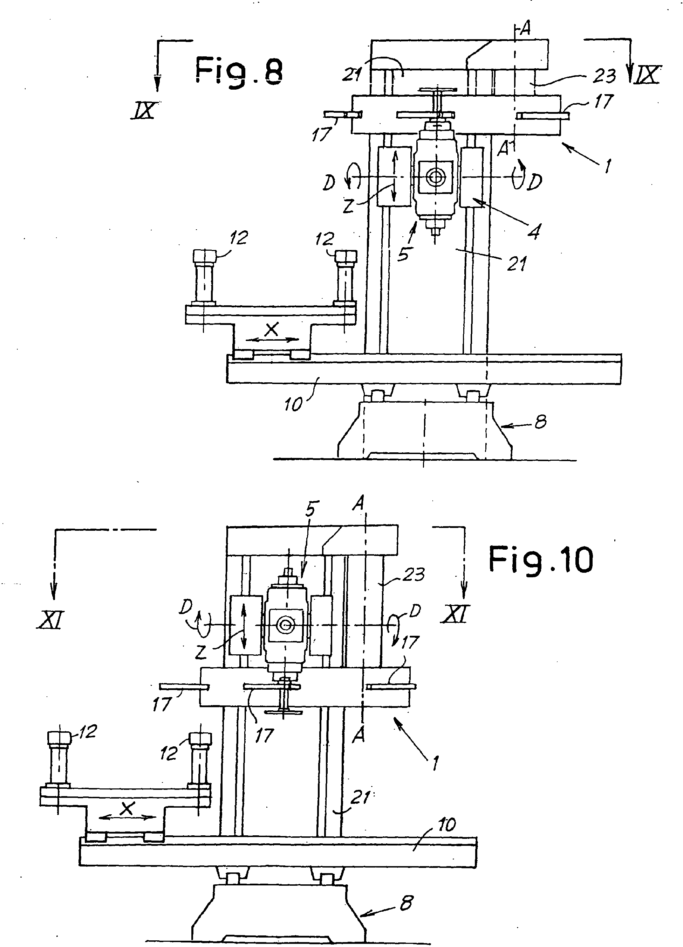

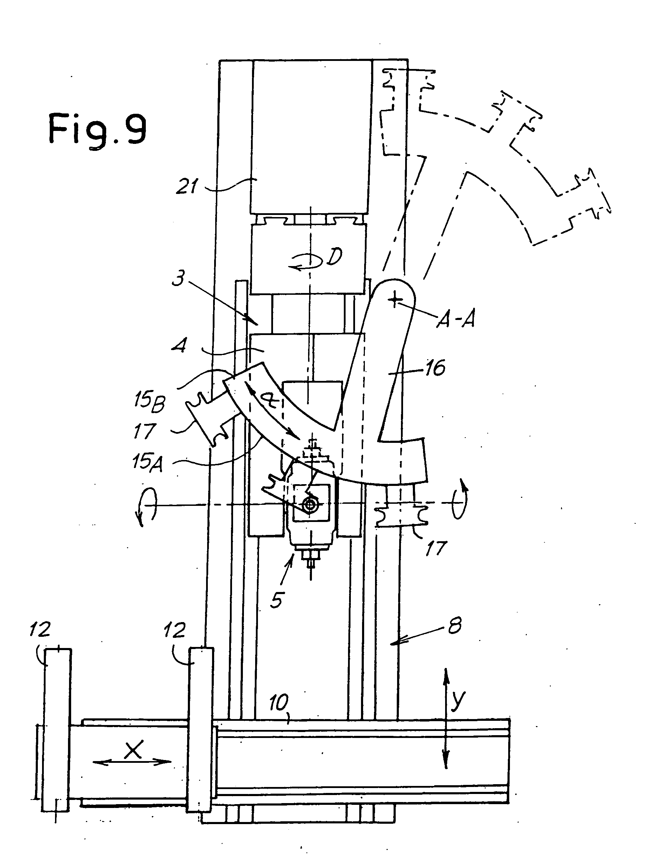

Figs 8 and 9 illustrate the application of a tool-holder storage device according to the invention to a machine tool with a different structure. In this case, the machine tool includes an upright 21 supporting the operating head 3 and positioned in front of a base 10 along which a slide 10 translates in the direction Y. A carriage 14 is found on slide 10 that carries the means of support for the workpieces to be machined, schematically designated at 12 and moving along the X axis. The operating head 3 has been designed only for movement along the Z axis and the movements of oscillation along the D and E axes.

The tool-holder storage device is again designated with a 1 and is carried by the upright 21 by means of a support 23, shown in Fig. 8 and omitted in Fig. 9. In this embodiment, the tool-holder storage device 1 has a rotating unit in the shape of a section of an annulus with a limited angular development of less than 90°. The annulus section, designated with a 15, constitutes the corresponding part of the segment of circle 15 in the previous example of configuration and bears supports 17 positioned along the external development of the annulus section. In this case, too, the shape of the rotating unit 15 is derived from an axial-symmetric figure (with respect to the A-A axis) that has a portion of the figure removed along a part of the perimeter section, again designated with 15B. The supports for the tools are positioned along the remaining part of the perimeter development 15A.

The rotating unit 15 in the shape of an annulus segment is supported on the A-A axis by means of an arm 16 hinged to the support 23 and able to oscillate according to arrow f15, in a higher position with respect to the working area of the operating head 3.

Each support 17 can support a pair of tools positioned with their axes parallel to the A-A axis of oscillation of the rotating unit.

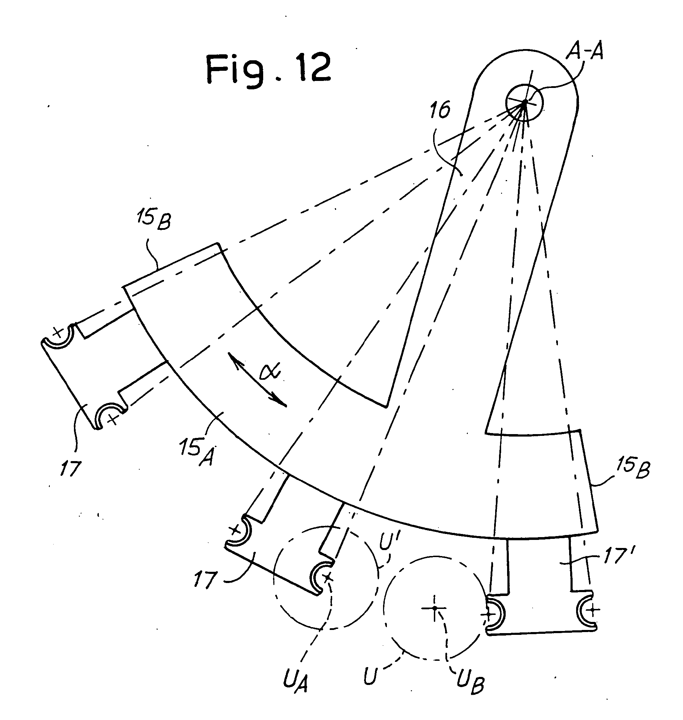

The tool-holder storage device shown in Figs. 8, 9, 10, and 11 enables the substitution of the tools with a single movement of the operating head. The way in which the movements are performed to withdraw and deposit the units from and into the storage device are better illustrated in Fig. 12, which is an enlargement of the plan view of the tool-holder storage device in this embodiment.

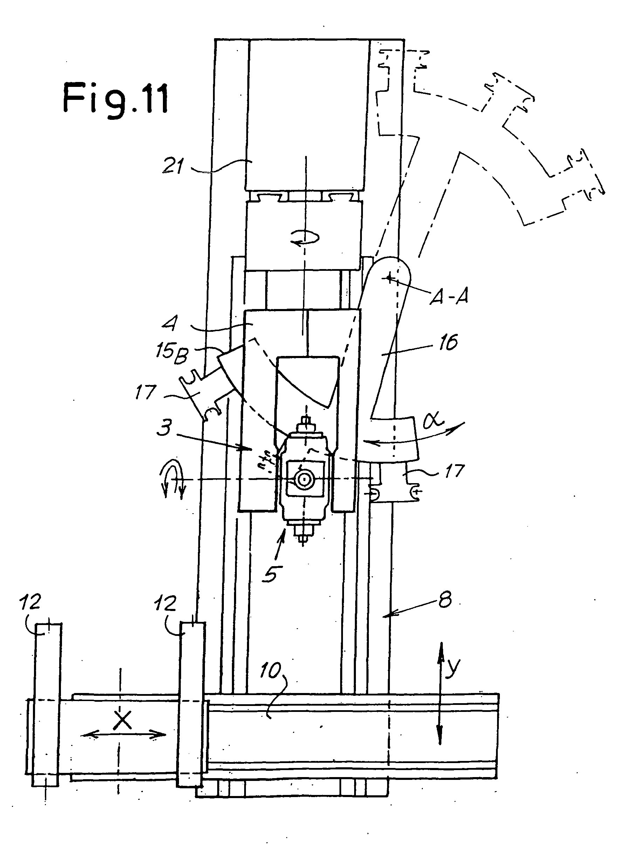

To carry out the substitution of the tools, the tool-holder storage device moves from its concealed position, illustrated with broken line in Figs. 9 and 11 (the position assumed when the machine tool is operating) to the position designated with unbroken line. The supports 17 are distant from one another in order to enable the unobstructed passage of a tool U to be withdrawn or deposited between the adjacent tool U' (Fig. 12) and the support 17' from where said tool U must be either withdrawn or inserted. Since this space is available, the rotating unit 15 is positioned in an angular position so that the axis of spindle 5 - where tool U will be applied or removed - is found between the adjacent supports 17 and 17'. The spindle is then raised (in the case of Figs. 8 and 9) or lowered (as in Figs. 10 and 11) until the collar of the tool is conveyed to the height of supports 17 and 17'. This done, the rotating unit is moved angularly until the axis UA of the tool corresponds with the support 17' (position UB of Fig. 12) where the tool is deposited. A series of reverse movements enables the tools to be withdrawn. In essence, the movements for withdrawing and depositing the tools are sequential movements of translation along the axis Z of the spindle and the axis of oscillation or rotation of the tool-holder storage device around the axis A-A.

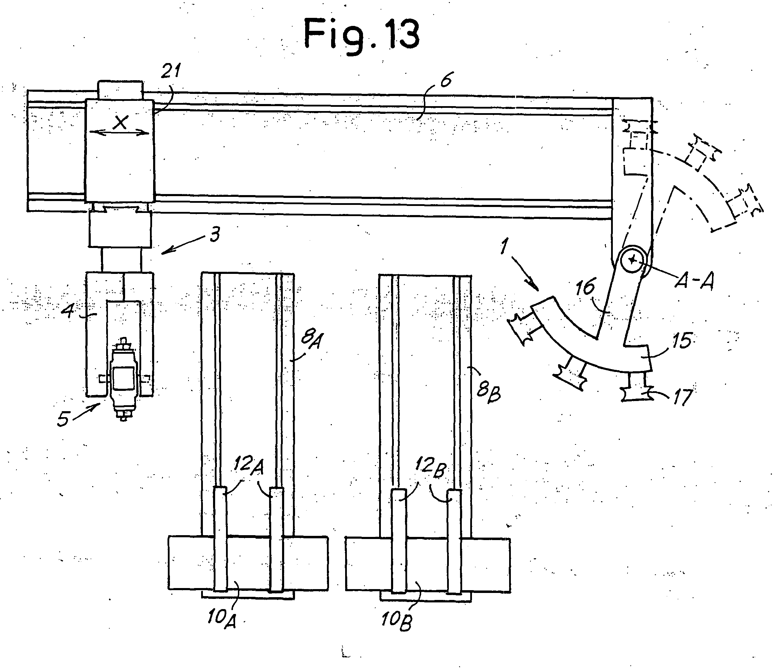

Fig. 13 illustrates a plan view of the application of the tool-holder storage device in Figs. 8 - 12 for a machine tool of the type illustrated in Fig. 6. The same numbers designate identical parts or parts corresponding to the previous figures.

As in the previous embodiment, in this case too, the simple rotation around axis A-A enables both to convey the supports 17 of the tools to the withdrawal and deposit area as well as to select the supports to present to the spindle to withdraw and/or deposit the tools. The inventive concept illustrated above in a series of embodiments can be implemented in a variety of solutions, including with rotating units that don't have circular edges. For example, it can be envisaged that the rotating unit has a polygonal development, for example, hexagonal, octagonal or with a larger number of sides. The supports 17 of the tools U will be positioned along the sides, while a part of the polygon will be removed in order to obtain the possibility to conceal the storage device from the working area i.e. the area of substitution of the tools by means of a simple rotation of the unit around its axis. In general, the supports 17 of the toolss are positioned along an arc of a circumference which is less than 360° and therefore constituting a portion of the circumference along which the supports are moved by means of the rotation of the rotating unit 15 around the axis of rotation A-A. The rotating unit is correspondingly cut in the area in which the supports for the tools will not be positioned, in order to reduce its overall dimensions that will consequently free up the area of the tool change by means of the simple rotation of the rotating unit 15 along the A-A axis of the tool selection.

It is understood that the illustration shows only practical and non-limiting embodiments of the invention, which can vary in its forms and arrangement without departing from the framework of the concept on which the invention is based, as defined in the claims that follow. The presence of reference numbers in the claims included does not limit the scope of protection and have the sole purpose of facilitating the reading reference being made to the preceding description.

## Claims

1. A machine tool including: an operating head (3) including at least one spindle (5) for at least one tool (U); and a tool-holder storage device (1), rotating around an axis of rotation (A-A) and including a plurality of supports (17), said unit having a disc shape or an annular shape with a portion removed along a first section (15B) of its perimeter development, the supports (17) being arranged around the remaining section (15A) of the perimeter development of the rotating unit, the rotation around said axis (A-A) introducing and removing the supports into and from a withdrawal and deposit area of the tools from and onto said supports; wherein said operating head is movable at least along a translation axis (Z), **characterized in that** in order to substitute said tools, said spindle (5) is controlled to translate only along an axis (Z) parallel to the axis of rotation (A-A) of said rotating unit (15), and said unit (15) is controlled to perform a rotation or oscillation motion around its axis of rotation (A-A), in order to bring closer or distance the supports to the axis of the spindle which either bears the tool to be deposited into the storage device or on which the tool to withdraw from the storage device must be applied.

2. Machine tool according to Claim 1, **characterized in that** said machine tool is controlled by a programmable central unit, said central unit controlling the movements of this spindle (5), and that the tool-holder storage device (1) is associated with a motor that controls the rotation around its axis (A-A), said motor being controlled by said central unit in order to position the tool-holder storage device in a way synchronized with the movement of the spindle.

3. Machine tool according to claim 1 or 2, **characterized in that** said supports (17) for the tools (U) are positioned in a way that the tools are arranged on said supports with their axes parallel to the axis of rotation (A-A) of the rotating unit.

4. Machine tool according to Claim 1, 2 or 3, **characterized in that** said rotating unit has the shape of a segment of an annulus having a development less than 360°, said supports (17) of the tools being contained in said section.

5. Machine tool according to one or more of the Claims 1 to 3, **characterized in that** the rotating unit has a disk shape with a circular segment development.

6. Machine tool according to one or more of the Claims 1 to 4, **characterized in that** said rotating unit (15) is supported by an arm (16) that intersects the center of the annulus, said center lying on the axis of rotation (AA) of the rotating unit (15).

7. Machine tool according to one or more of the preceding claims, **characterized in that** said spindle is movable around at least one rotation axis (D-D).

8. Machine tool according to one or more of the preceding claims, **characterized in that** said spindle is movable around two mutually orthogonal rotation axes.

9. A tool-holder storage device for a machine tool, comprising a unit (15) rotating around a respective axis of rotation (A-A) with a plurality of supports (17) for said tools (U), **characterized in that** said rotating unit (15) has a portion removed along a first section (15B) of its perimeter development, the supports (17) being arranged around the remaining section (15A) of the perimeter development of the rotating unit, the rotation around said axis (A-A) introducing and removing the supports into and from a withdrawal and deposit area of the tools from and onto said supports.

10. A storage device according to Claim 9, **characterized in that** said rotating unit has an asymmetrical shape with respect to a plane perpendicular to the rotating unit and containing the axis of rotation (A-A) of said rotating unit.

11. A storage device according to Claim 9 and 10, **characterized in that** said supports (17) of the tools are arranged along an arc of less than 360° in circumference, along which the supports are moved with the rotation of said rotating unit (15) around the axis of rotation (A-A).

12. A storage device according to Claim 9, 10 and 11, **characterized in that** the supports (17) of the tools are contained in a section of an annulus having a development less than 360°.

13. A storage device according to one or more of the Claims 9 to segment development.

14. A storage device according to one or more of the Claims 9 to 12, **characterized in that** said rotating unit has the shape of a segment of an annulus.

15. A storage device according to Claim 13, **characterized in that** the segment of circle is delimited by a circumferential edge and a chord, the centre of the circle to which this segment belongs lying on the axis of rotation of said rotating unit.

16. A storage device according to one or more of the Claims 9 to 12, **characterized in that** said rotating unit has the shape of a section of an annulus supported by an arm that intersects the center of the annulus, said center lying on the axis of rotation of the rotating unit.

17. A storage device according to one or more of Claims 9 to 16, **characterized by** including a motor for controlling the rotation of said rotating unit.

18. A storage device according to Claim 17, **characterized in that** the movement of said motor is controlled in a synchronized way with the movement of spindle approach of the machine tool to which the storage device is associated.

19. A storage device according to one or more of Claims 9 to 18, **characterized in that** said tool supports are laid out so that the toools are gathered in a radial position with respect to the rotating unit.

20. A storage device according to Claim 19, **characterized in that** said rotating unit presents at least two overlapping series of these supports.

21. A storage device according to Claim 12, 14, or 16, **characterized in that** said supports for the tools are positioned tangentially along the development of the annulus segment and in a way that the tools are arranged on said supports with their axes parallel to the axis of rotation of the rotating unit.

22. A machine tool including at least one spindle for at least one tool and a tool-holder storage device for said spindle, **characterized in that** this tool-holder storage device is designed according to one or more of the

23. A machine tool according to Claim 22, **characterized in that** said machine tool is controlled by a programmable central unit, said central unit controlling the movements of this spindle, and that the tool-holder storage device is associated with a motor that controls the rotation around its respective axis, said motor being controlled by said central unit in order to position the tool-holder storage device in a way synchronized with the movement of the spindle.

24. A machine tool according to Claim 22 or 23, **characterized in that** said spindle is provided with a movement along at least two numeric-control axes, either translation or translation and rotation, so that it can carry out the movements of withdrawal and deposit of the tools from and on said storage device.

25. A machine tool according to Claim 22 or 23, **characterized in that** in order to substitute said tools, the spindle translates only along an axis parallel to the axis of rotation of said rotating unit of the tool-holder storage device, said tool-holder storage device being provided with a rotation or oscillation motion around said axis of rotation of the storage device itself, in order to bring closer or distance the supports to the axis of the spindle which either bears the tool to be deposited into the storage device or on which the tool to withdraw from the storage device must be applied.
